# EUROPÄISCHE PATENTSCHRIFT

(11) **EP 1 243 483 B1**
(45) Veröffentlichungstag und Bekanntmachung des Hinweises auf die Patenterteilung: **15.07.2009**
(21) Anmeldenummer: 02090105.4
(22) Anmeldetag: 11.03.2002
(51) Int. Cl.: B60R 21/20

(54) **Verfahren zur Montage einer Airbageinheit und Airbageinheit**
Airbag module and method for assembly thereof
Module de coussin gonflable et procédé pour son assemblage

(30) Priorität: 20.03.2001 DE 10114736
(43) Veröffentlichungstag der Anmeldung: 25.09.2002
(73) Patentinhaber: TAKATA - PETRI AG, 63743 Aschaffenburg (DE)
(72) Erfinder: Aulbach, Alexander, 89073 Ulm (DE)
(74) Vertreter: Baumgärtel, Gunnar

(56) Entgegenhaltungen:
- EP-A- 0 609 959
- EP-A- 0 822 124
- GB-A- 2 291 015
- US-A- 5 462 305
- US-A- 5 558 362

## Beschreibung

Die Erfindung betrifft ein Verfahren zur Montage einer Airbageinheit sowie eine Airbageinheit.

Es ist bekannt, Rückhaltessysteme für Fahrzeuge, die einen Gassack (Cushion) und einen Gasgenerator (Inflator) umfassen, in Modulbauweise herzustellen (Airbageinheit). Diese Airbageinheiten oder Airbagmodule sind nach ihrem Zusammenbau komplett am Fahrzeug montierbar. Bei den bekannten Rückhaltesystemen in Modulbauweise ist es dabei üblich, den Gassack am Gasgenerator zu befestigen und den Gassack anschließend zu falten. Diese vormontierte Einheit wird dann in ein Gehäuse eingesetzt.

Nachteilig dabei ist, daß der Gasgenerator bereits zu Beginn des Zusammenbaus des Airbagmoduls montiert werden muß. Es ist deshalb erforderlich, besondere Vorkehrungen bezüglich der Sicherung des Gasgenerators zu treffen, insbesondere Vorkehrungen zu treffen, die ein vorzeitiges, ungewolltes Auslösen sicher verhindern. Dadurch werden die Kosten der Herstellung erheblich erhöht.

Bei Frontairbags ist es bekannt, den Gassack in ein Gehäuse einzubringen und anschließend mit einem Gasgenerator zu verbinden. Der Gasgenerator und das Gehäuse werden dabei an einem Generatorträger der Airbageinheit befestigt.

In der EP-A-0 822 124 wird eine Airbageinheit beschrieben, die einen Gassack, einen Gasgenerator zum Aufblasen des Gassacks und ein Gehäuse zur Aufnahme des Gassackes aufweist. An dem Gehäuse ist ein als Halteschelle ausgebildetes Befestigungsstück angebracht, in dem der Gasgenerator nach der Montage des Gassacks am Gehäuse aufgenommen wird.

Die GB-A-2 291 015 beschreibt eine Airbageinheit mit einem Gassack, einem Gasgenerator zum Aufblasen des Gassackes und einem Gehäuse zur Aufnahme von Gassack und Gasgenerator. Das Gehäuse weist eine Aufnahmeöffnung auf, in der der Gasgenerator nach der Montage des Gassackes an dem Gehäuse aufgenommen wird.

Der Erfindung liegt die Aufgabe zugrunde, ein Verfahren zur Montage einer Airbageinheit sowie eine Airbageinheit zur Verfügung zu stellen, die sich durch eine einfache Montage und eine erhöhte Produktionssicherheit auszeichnen und dabei kostengünstig sind.

Diese Aufgabe wird erfindungsgemäß durch ein Verfahren mit den Merkmalen des Anspruchs 1 und durch eine Airbageinheit mit den Merkmalen des Anspruchs 8 gelöst. Bevorzugte und vorteilhafte Ausgestaltungen der Erfindung sind in den Unteransprüchen angegeben.

Danach wird beim zusammenbau einer Airbageinheit, die einen Gassack, einen Gasgenerator und ein Gehäuse mit einem Gehäuseboden umfasst, zunächst der Gassack gefaltet und am Gehäuse befestigt. Die Faltung kann alternativ auch nach Befestigung des Gassacks am Gehäuse erfolgen. Nach Abschluß der Montage des Gassacks wird der Gasgenerator in das Gehäuse eingeführt und befestigt. Hierbei wird der Gasgenerator in eine separate Aufnahmeöffnung des Gehäusebodens eingeführt. Der Gasgenerator wird zur Absicherung gegen ein Herausrutschen aus der Aufnahmeöffnung durch ein äußeres Befestigungsstück (Outer Retainer) am Gehäuse gesichert. Da sich das Befestigungsstück außerhalb des Gehäuses befindet, wird der Gasgenerator erst nach dem Einschieben des Gasgenerators in die Aufnahmeöffnung am Gehäuse befestigt. Das Befestigungsstück ist im wesentlichen halbzylindrisch ausgebildet. Das Material des Gehäusebodens drückt auf etwa einer Hälfte seines Umfanges gegen den Gasgenerator.

Somit werden Gassack und Gehäuse zunächst zu einer vormontierten Einheit zusammengesetzt und wird der Gasgenerator als letztes Element zu dieser Einheit hinzugefügt. Es müssen demnach während der Montage der anderen Elemente keine Vorsichtsmaßnahmen zur Verhinderung eines vorzeitigen Auslösens des Gasgenerators getroffen werden. Die Produktionskosten verringern sich dadurch erheblich.

Es besteht weiter die Möglichkeit, den Einbau des Gassacks und den Einbau des Gasgenerators in örtlich unterschiedlichen Produktionsstätten durchzuführen. Dadurch lassen sich ebenfalls die Produktionskosten weiter verringern.

Durch Vorsehen einer separaten Aufnahmeöffnung für den Gasgenerator muß dieser nur noch in das Gehäuse eingeschoben und befestigt werden. Die Orientierung des Gasgenerators und seine Ausrichtung gegenüber dem Gassack werden durch die Aufnahmeöffnung automatisch festgelegt. Hierdurch ist eine einfache Montage möglich. Ein weiterer Vorteil besteht darin, daß das Gehäuse bzw. die Aufnahmeöffnung der Befestigung des Gasgenerators dient, so daß zusätzliche Befestigungsstrukturen wie ein Generatorträger nicht erforderlich sind. Auch bleibt der Gassack von der Montage des Gasgenerators unberührt.

In einer vorteilhaften Ausführung der Aufnahmeöffnung wird der Gasgenerator in diese hineingepresst, so daß gleichzeitig eine Abdichtung der Öffnung erfolgt. Das die AufnahmeÖffnung ausbildende Material des Gehäuses drückt gegen den Gasgenerator und dichtet ihn somit nach außen hin ab. Der Gasstrom wird dadurch bereits in eine bevorzugte Ausströmrichtung gelenkt und es sind keine besonderen Abdichtungsmaßnahmen erforderlich.

Das Material des Gehäuses gibt vorzugsweise während des Befestigens des Gasgenerators mit dem äußeren Befestigungsstück nach, so daß das Befestigungsstück den Gasgenerator im Gehäuse festpressen kann.

Das äußere Befestigungsstück dient auch der Abdichtung des Gasgenerators und der Lenkung des Gastromes in eine bevorzugte Ausströmöffnung.

Der Gassack wird bevorzugt mit einem Gassackhaltering (Cushion Ring) am Gehäuse befestigt. Der Gassackhaltering wird vor der Faltung des Gassacks in diesen hineingesetzt. Der Gassack wird dann in eine Abdeckkappe des Gehäuses (Cover Top) oder den Gehäuseboden (Cover Bottom) eingefaltet bzw. nach Faltung in eine Abdeckappe oder einen Gehäuseboden eingesetzt.

Die Erfindung stellt des weiteren eine Airbageinheit zur verfügung. Diese setzt sich aus einem Gassack, einem Gasgenerator und einem Gehäuse zu deren Aufnahme zusammen. Die Airbageinheit weist in ihrem Gehäuse eine separate Aufnahmeöffnung zur Aufnahme des Gasgenerators auf. Dadurch ist es möglich, den Gasgenerator erst nach Beendigung der Montage des Gassacks in das Gehäuse einzubauen.

Erfindungsgemäß ist die Aufnahmeöffnung in einem Gehäuseboden des Gehäuses ausgebildet und es ist ein Befestigungsstück vorgesehen, mittels dessen der Gasgenerator an dem Gehäuseboden befestigt ist, wobei das Befestigungsstück im wesentlichen halbzylindrisch ausgebildet ist und das Material des Gehäusebodens auf etwa einer Hälfte seines Umfanges gegen den Gasgenerator drückt.

Die Aufnahmeöffnung ist bevorzugt derart gestaltet, daß der Gasgenerator einschiebbar ist. Vorzugsweise ist die Aufnahmeöffnung dabei korrespondierend zu einem zylindrischen Gasgenerator ebenfalls zylindrisch ausgebildet. Das Einschieben des Gasgenerators ist dadurch in besonders einfacher Art und Weise möglich.

Es ist von Vorteil, wenn der Durchmesser der zylindrischen Aufnahmeöffnung kleiner als der des einzuführenden Gasgenerators ausgebildet ist. Dadurch ist es möglich, den Gasgenerator mittels einer Presspassung in der Aufnahmeöffnung zu befestigen. Der Gasgenerator ist dabei gleichzeitig nach außen abgedichtet und der Gasstrom ist in eine bevorzugte Ausströmrichtung lenkbar.

Für die Anwendung dieser Presspassung ist es von Vorteil, elastisches Material für das Gehäuse in Bereich der Aufnahmeöffnung zu verwenden. Die Abdichtung wird optimiert, da das Material um die Aufnahmeöffnung elastisch an den Gasgenerator angedrückt wird.

Um die Montage der Airbageinheit möglichst einfach zu gestalten, ist das Gehäuse bevorzugt mehrteilig ausgebildet und weist vorzugsweise eine Abdeckkappe (Cover Top) und einen Gehäuseboden (Cover Bottom) auf. Dabei bildet der Gehäuseboden die Aufnahmeöffnung zur Aufnahme des Gasgenerators aus, wobei eine gewisse räumliche Trennung vom gefalteten Gassack vorliegt. Lediglich durch Öffnungen bzw. Durchbrüche im Gehäuseboden wird ein Einströmen von aus dem Gasgenerator ausströmendem Gas in den Gassack ermöglicht.

Es wird darauf hingewiesen, daß die Abdeckkappe und der Gehäuseboden auch einteilig ausgebildet sein können, wobei die Abdeckkappe und der Gehäuseboden bevorzugt über ein Scharnier gegeneinander klappbar ausgebildet sind.

Die Erfindung wird nachfolgend unter Bezugnahme auf die Figuren der Zeichnung näher erläutert. Es zeigen:
- Fig. 1: eine Airbageinheit vor der Montage,
- Fig. 2: die Airbageinheit der Fig. 1 nach Einsetzen eines Gassackhalteringes in den Gassack,
- Fig. 3: die Airbageinheit der Fig. 2 nach dem Falten des Gassacks und Einlegen in eine Abdeckkappe,
- Fig. 4: die Airbageinheit der Fig.3 nach Befestigen der Abdeckkappe an einem Gehäuseboden,
- Fig. 5: die Airbageinheit der Fig. 4 nach Einschieben eines Gasgenerators,
- Fig. 6: die Airbageinheit der Fig. 5 nach Befestigen eines äußeren Befestigungsstücks,
- Fig. 7: eine Schnittdarstellung der Airbageinheit der Fig. 6.

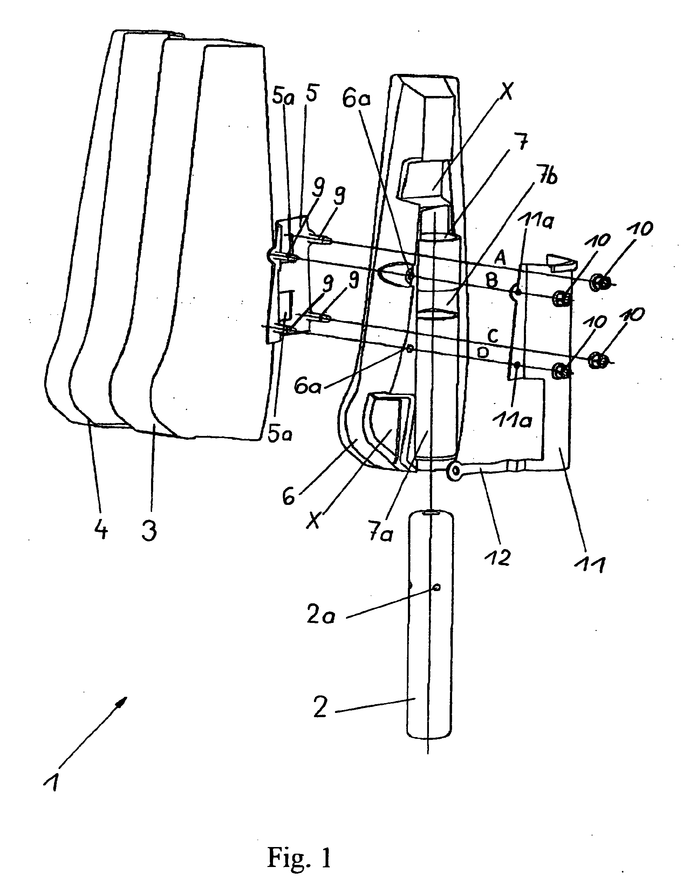

Die Figur 1 zeigt die wesentlichen Bauelemente, die für die Herstellung einer Airbageinheit nach dem erfindungsgemäßen Montageverfahren benötigt werden, vor ihrem Zusammenbau.

Die Bauelemente sind dabei bereits für den Zusammenbau positioniert. Durch Montagelinien A, B, C und D ist ersichtlich, welche Bauelemente miteinander korrespondieren.

Bei der dargestellten Airbageinheit handelt es sich um einen Seitenairbag.

Gemäß Figur 1 weist die Airbageinheit eine Gehäuseboden 6, eine Abdeckkappe 4, einen Gassack 3 und einen Gasgenerator 2 auf. Die Abdeckkappe 4 ist als längliches, wannenartiges Element ausgebildet. Die Kontur ihres Umfanges entspricht der Kontur des Umfanges des Gehäusebodens 6, der ebenfalls länglich geformt ist.

Der Gehäuseboden weist eine längliche Aufnahmeöffnung 7 auf, die durch eine einstückig mit dem Gehäuseboden ausgebildete zylindrische Hülse 7a aus elastischem Material gebildet wird. Diese Hülse weist einen leicht oberhalb der Hälfte liegenden über den gesamten Umfang ausgesparten Abschnitt 7b auf. Weiter weist der Gehäuseboden 6 mehrere Bohrungen 6a auf, die in einem mittleren Abschnitt bezüglich der Länge des Gehäusebodens 6 angeordnet sind. In den Gehäuseboden 6 sind zusätzliche Ausformungen X eingebracht. Die Form der Aufnahmeöffnung 7 korrespondiert im wesentlichen mit der Form des Gasgenerators 2.

Des weiteren ist schematisch der vorgefaltete Gassack 3 abgebildet, der in die Abdeckkappe 4 einsetzbar ist.

Alternativ kann vorgesehen sein, den Gassack in eine Vertiefung im Gehäuseboden einzusetzen bzw. einzufalten. Die Abdeckkappe ist dann als flaches Element ausgebildet, das auf den Gehäuseboden aufgesetzt wird.

Ein Gassackhaltering 5 ist im wesentlichen halbzylindrisch ausgebildet. An ihm sind mehrere Gewindebolzen 9 angeformt, die alle in Befestigungsrichtung abstehen. Der Gassackhaltering 5 weist mehrere Öffnungen 5a auf, die im abgebildeten Beispiel eckig ausgeführt sind, deren Form aber variieren kann. Durch diese Öffnungen kann im Auslösefall aus dem Gasgenerator ausströmendes Gas in den Gassack 3 einströmen, der in dem Bereich, der an dem Gassackhaltering 5 anliegt, hierfür entsprechende Aussparungen aufweist.

Entsprechend der Anzahl der Gewindebolzen 9 ist eine Anzahl Muttern 10 vorgesehen.

Weiter ist ein äußeres Befestigungsstück 11 vorgesehen. Es ist im wesentlichen halbzylindrisch geformt und entspricht in seiner Länge in etwa der Länge der Hülse 7a. Zur Aufnahme der Gewindebolzen 9 sind im Randbereich des Befestigungsstückes mehrere Montageöffnungen 11a. Weiter ist an dem unteren Ende des Befestigungsstücks 11 eine Lasche 12 angeformt, über die die montierte Airbageinheit im Kraftfahrzeug montierbar ist. Insbesondere kann die Lasche 12 über Haken oder andere Befestigungsmittel am Lehnenholm und/oder der Fahrzeugtür befestigt werden.

Der Gasgenerator 2 ist als Rohrgasgenerator ausgebildet und weist eine längliche, zylindrische Form aus. An seinem Umfang sind zahlreiche Ausströmöffnungen 2a verteilt, von denen nur eine abgebildet ist. Bevorzugt werden zwei bis vier Ausströmöffnungen realisiert.

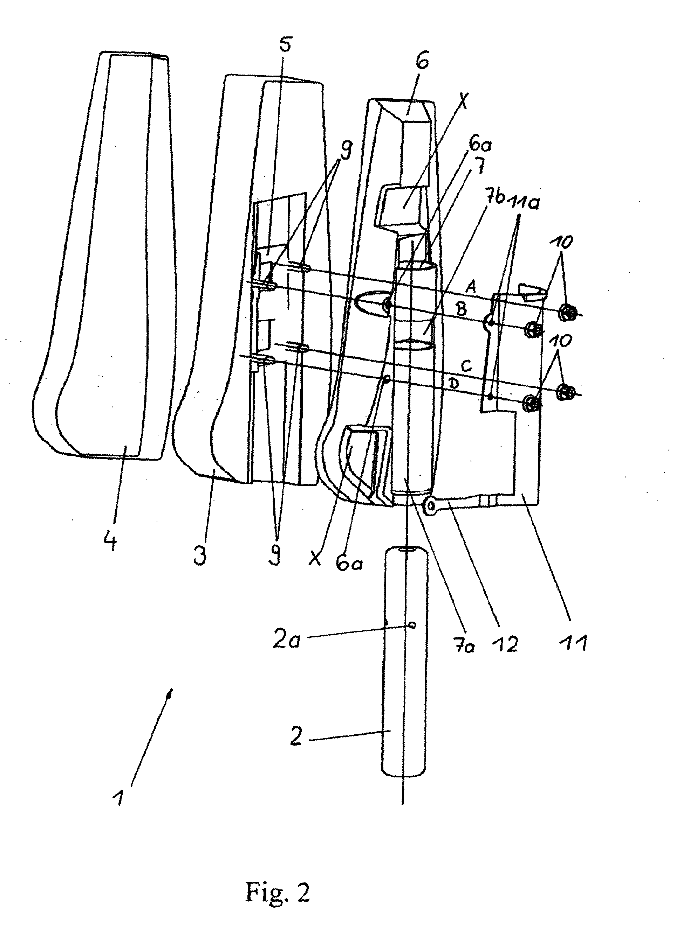

In Fig. 2 ist nach einem ersten Arbeitsschritt der Gassackhaltering 5 in den Gassack eingebracht worden. Die Bolzen 9 treten dabei an dafür vorgesehenen Stellen durch den Gassack durch und stehen in Montagerichtung hervor.

Nach Einbringen des Gassackhalterings 5 wird der Gassack 5 gefaltet und anschließend in die Abdeckkappe 4 gelegt. Alternativ kann der gefaltete Gassack auch in den Gehäuseboden gelegt werden, sofern im Gehäuseboden eine entsprechende Vertiefung vorgesehen ist.

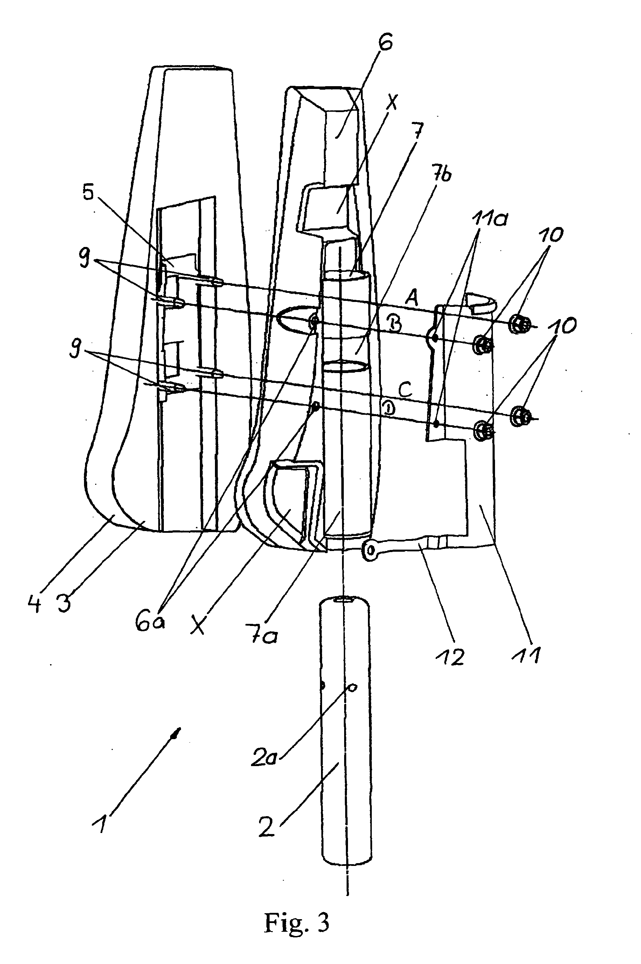

In Fig. 3 ist der gefaltete, in die Abdeckkappe 4 gelegt Gassack 3 dargestellt. Die Abdeckkappe 4 ist nun vorbereitet zur Befestigung am Gehäuseboden 6.

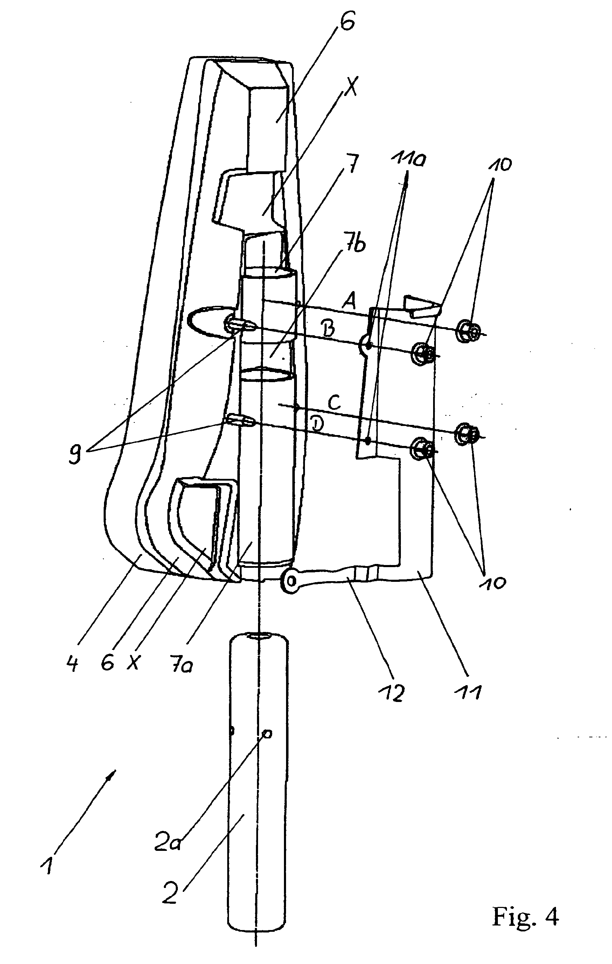

Fig. 4 zeigt die Airbageinheit 1 nach Befestigung der Abdeckkappe 4 am Gehäuseboden 6. Die Gewindebolzen 9 des Gassackhalteringes 5 wurden dabei durch die korrespondierenden Bohrungen 6a entlang den Montagelinien A, B, C und D gesteckt. Der Gassack 3 wird dabei über den Gassackhaltering und die Bolzen 9 an dem Gehäuseboden befestigt. Die Airbageinheit ist soweit vormontiert, daß jetzt nur noch der Gasgenerator eingeschoben und befestigt werden muß. Die Einschieberichtung des Gasgenerators 2 ist dabei im wesentlichen senkrecht zur Entfaltungsrichtung des Gassacks 3.

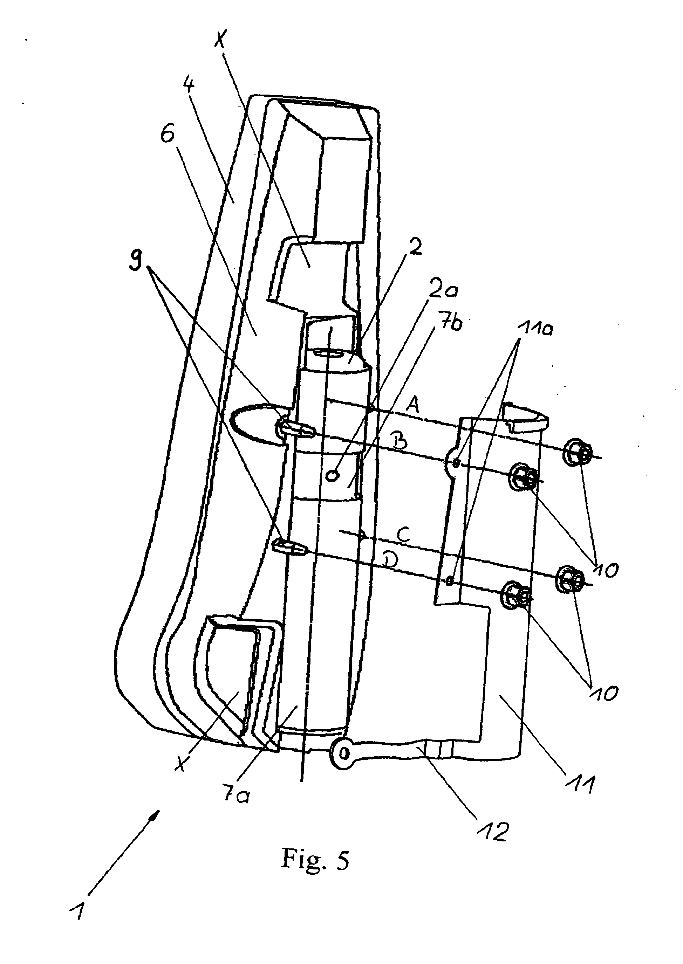

Fig. 5 zeigt die Airbageinheit 1 nach dem Einschieben des Gasgenerators 2 von unten hinein in die Aufnahmeöffnung 7 der Hülse 7a. Er sitzt in der Aufnahmeöffnung 7 innerhalb der Hülse 7a. Die Ausströmöffnungen 2a des Gasgenerators 2 liegen dabei insbesondere in dem ausgesparten Abschnitt 7b der Hülse 7a, so daß im Auslösefall Gas aus der Hülse 7a austreten und in den Gassack einströmen kann.

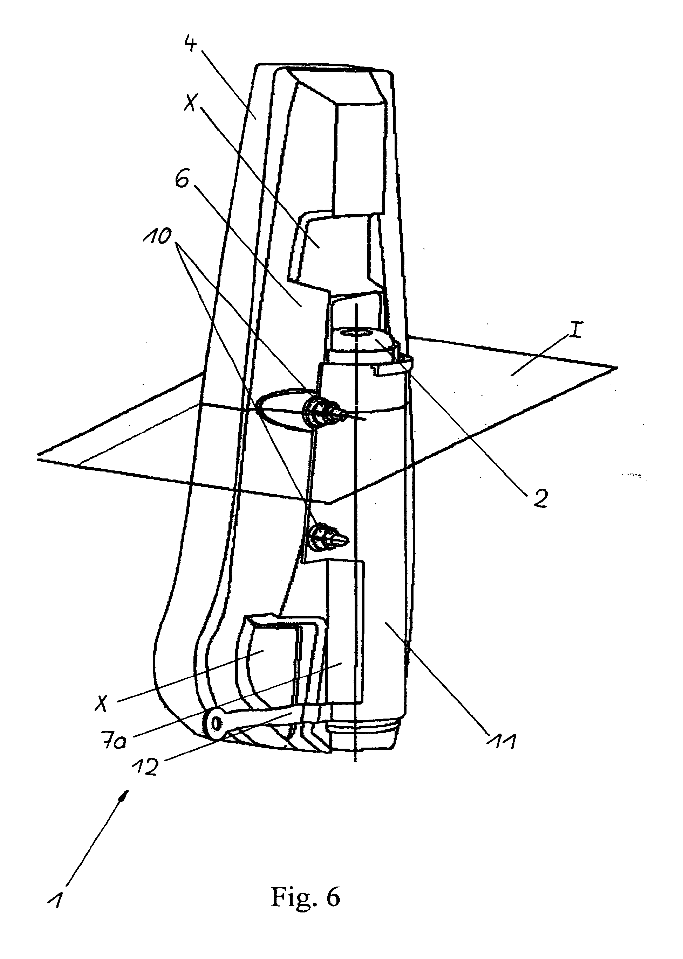

Figur 6 zeigt die fertig montierte erfindungsgemäße Airbageinheit. Zur Abdichtung des Gasgenerators 2 und zu dessen Befestigung ist in einem letzten Arbeitsschritt das äußere Befestigungsstück 11 montiert. Das Befestigungsstück 11 wird dazu mit seinen Montageöffnungen 11a auf die aus dem Gehäuseboden hervorstehenden Gewindebolzen 9 entlang den Montagelinien A, B, C und D gesteckt und mit den Muttern 10 verschraubt. Beim Festziehen der Muttern wird das Gehäuse 7 leicht verspannt, so der Gasgenerator 2 in der Aufnahmeöffnung eingepreßt und dort fest und sicher befestigt ist.

Zusätzlich ist bevorzugt vorgesehen, daß der Durchmesser der Aufnahmeöffnung 7 geringfügig kleiner ist als der Durchmesser des Gasgenerators, so daß bereits bei Einschieben des Gasgenerators 2 eine Preßpassung vorliegt, die darüber hinaus auch der Abdichtung der Aufnahmeöffnung 7 dient.

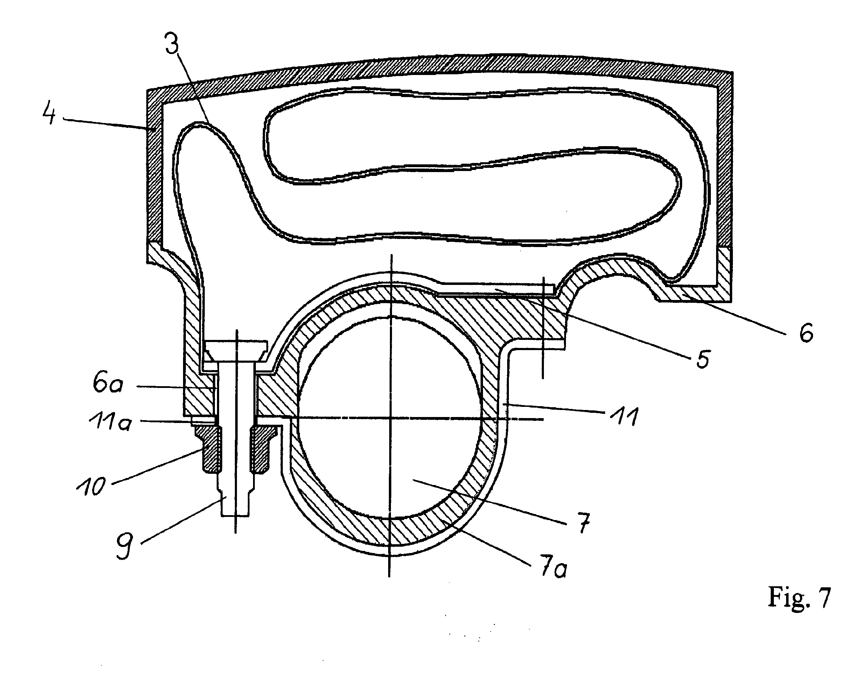

Fig. 7 zeigt eine Schnittdarstellung entsprechend der Schnittebene I der Fig. 6. Das U-förmige Querschnittsprofil der Abdeckkappe 4 bildet eine Wanne zur Aufnahme des gefalteten Gassackes 3. Dieser liegt an der Innenwand des Gehäusebodens 6 an, darüber liegt der Gassackhaltering 5. Der Gehäuseboden 6 bildet in seiner Mitte durch die Hülse 7a die in der Schnittdarstellung kreisförmige Aufnahmeöffnung 7 aus. An der Außenseite der Hülse 7a liegt das äußere Befestigungsstück 11 an. Es wird darauf hingewiesen, daß der Gehäuseboden 6 sich zwischen dem Gassack 3 und dem Gasgenerator befindet.

Als Beispiel für die Verschraubungen der Bauelemente miteinander ist ein Gewindebolzen 9 dargestellt, der am Gassackhaltering 5 befestigt ist. In der Reihenfolge von innen nach außen durchgreift er folgende Öffnungen: Eine Bohrung am Gassackhaltering, eine Öffnung im Gassack 3, die Bohrung 6a im Gehäuseboden 6 und die Montageöffnung 11a im äußeren Befestigungsstück 11. Der Gewindebolzen 9 ist mit der Mutter 10 verschraubt.

Die Erfindung beschränkt sich nicht auf die vorstehend dargestellten Ausführungsbeispiele sondern auf die beanspruchte Erfindung. Wesentlich für die Erfindung ist allein, daß ein Verfahren zur Montage einer Airbageinheit die Schritte des Faltens des Gassacks, des Montierens des Gassacks am Gehäuse, des anschließenden Einführens des Gasgenerators in eine Aufnahmeöffnung des Gehäuses und des Befestigens des Gasgenerators umfaßt und daß eine entsprechende Airbageinheit eine separate Aufnahmeöffnung zur Aufnahme des Gasgenerators nach Montage des Gassacks am Gehäuse aufweist.

### Bezugszeichenliste

- 1: Airbageinheit
- 2: Gasgenerator
- 2a: Ausströmöffnungen
- 3: Gassack
- 4: Abdeckkappe
- 5: Gassackhaltering
- 5a: Öffnungen
- 6: Gehäuseboden
- 6a: Bohrungen
- 7: Aufnahmeöffnung
- 7a: Hülse
- 7b: Aussparung
- 9: Gewindebolzen
- 10: Muttern
- 11: äußeres Befestigungsstück
- 11a: Montageöffnungen
- 12: Lasche
- A,B,C,D: Montagelinien
- X: Ausformungen

## Patentansprüche

1. Verfahren zur Montage einer Airbageinheit (1), die einen Gassack (3), ein Gehäuse (4, 6) mit einem Gehäuseboden (6) und einen Gasgenerator (2) umfasst, mit folgenden Schritten:
a. Falten des Gassacks (3),
b. Montieren des Gassacks (3) am Gehäuse (4, 6), anschließend
c. Einführen des Gasgenerators (2) in eine Aufnahmeöffnung (7) des Gehäusebodens (6), und
d. Befestigen des Gasgenerators (2) mit einem äußeren Befestigungsstück (11) am Gehäuse (4, 6), nachdem der Gasgenerator (2) in die Aufnahmeöffnung (7) geschoben wurde, wobei
e. das Befestigungsstück (11) im wesentlichen halbzylindrisch ausgebildet ist und das Material des Gehäusebodens (6) auf etwa einer Hälfte seines Umfanges gegen den Gasgenerator (2) drückt.

2. Verfahren nach Anspruch 1, **dadurch gekennzeichnet, dass** der Gasgenerator (2) in die Aufnahmeöffnung (7) eingepresst wird.

3. Verfahren nach Anspruch 1 oder 2, **dadurch gekennzeichnet, dass** das Material des Gehäuses (6) im Bereich um die Aufnahmeöffnung (7) während des Befestigens des Gasgenerators (2) mit dem äußeren Befestigungsstück (11) nachgibt und den Gasgenerator (2) in der Aufnahmeöffnung (7) festpresst.

4. Verfahren nach mindestens einem der vorhergehenden Ansprüche, **dadurch gekennzeichnet, dass** ein Gassackhaltering (5) in den Gassack (3) vor dessen Faltung eingesetzt und der Gassack (3) mittels des Gassackhalterings (5) an dem Gehäuseboden (6) befestigt wird.

5. Verfahren nach Anspruch 4, **dadurch gekennzeichnet, dass** der Gassack (3) mit eingesetztem Gassackhaltering (5) vor der Montage an den Gehäuseboden (6) in eine Abdeckkappe (4) des Gehäuses (4, 6) gelegt wird.

6. Verfahren nach Anspruch 5, **dadurch gekennzeichnet, dass** nach der Montage des Gassacks (3) in das Gehäuse Gehäuseboden (6) und Abdeckkappe (4) miteinander verbunden werden.

7. Verfahren nach Anspruch 4, **dadurch gekennzeichnet, dass** der gefaltete Gassack (3) mit eingesetztem Gassackhaltering (5) vor oder bei der Montage an den Gehäuseboden (6) in eine Vertiefung des Gehäusebodens gelegt wird.

8. Airbageinheit mit einem Gassack (3), einem Gasgenerator (2) zum Aufblasen des Gassacks (3) und einem Gehäuse (4, 6) zur Aufnahme von Gassack (3) und Gasgenerator (2), wobei das Gehäuse (4, 6) eine separate Aufnahmeöffnung (7) zur Aufnahme des Gasgenerators (2) nach Montage des Gassacks (3) am Gehäuse (4, 6) aufweist,
**dadurch gekennzeichnet,**
**dass** die Aufnahmeöffnung (7) in einem Gehäuseboden (6) des Gehäuses ausgebildet und ein Befestigungsstück (11) vorgesehen ist, mittels dessen der Gasgenerator (2) an dem Gehäuseboden (6) befestigt ist, wobei das Befestigungsstück (11) im wesentlichen halbzylindrisch ausgebildet ist und das Material des Gehäusebodens (6) auf etwa einer Hälfte seines Umfanges gegen den Gasgenerator (2) drückt.

9. Airbageinheit nach Anspruch 8, **dadurch gekennzeichnet, dass** die Aufnahmeöffnung (7) eine Einschuböffnung darstellt, in die der Gasgenerator (2) einschiebbar ist.

10. Airbageinheit nach Anspruch 9, **dadurch gekennzeichnet, dass** die Aufnahmeöffnung (7) im wesentlichen zylindrisch ausgebildet ist.

11. Airbageinheit nach Anspruch 10, **dadurch gekennzeichnet, dass** der Durchmesser der Aufnahmeöffnung (7) kleiner als der Durchmesser des Gasgenerators (2) ist.

12. Airbageinheit nach mindestens einem der Ansprüche 8 bis 11, **dadurch gekennzeichnet, dass** das Material des Gehäuses (4, 6) im Bereich der Aufnahmeöffnung (7) elastisch ausgebildet ist.

13. Airbageinheit nach mindestens einem der Ansprüche 8 bis 12, **dadurch gekennzeichnet, dass** das Gehäuse (4, 6) mehrteilig ausgebildet ist.

14. Airbageinheit nach Anspruch 13, **dadurch gekennzeichnet, dass** das Gehäuse eine Abdeckkappe (4) und den Gehäuseboden (6) umfasst.

15. Airbageinheit nach mindestens einem der Ansprüche 8 bis 14, **dadurch gekennzeichet,** dass das Befestigungsstück (11) den Gasgenerator (2) nach außen abdichtet.

16. Airbageinheit nach mindestens einem der Ansprüche 8 bis 15, **dadurch gekennzeichnet, dass** der Gassack (3) mit einem Gassackhaltering (5) am Gehäuseboden (6) befestigt ist.

17. Airbageinheit nach mindestens einem der Ansprüche 8 bis 16, **dadurch gekennzeichnet, dass** der Gassack (3), der Gassackhaltering (5) und das äußere Befestigungstück (11) über dieselben Befestigungsmittel, insbesondere Schraubverbindungen (9, 10), am Gehäuseboden (6) befestigt sind.

## Claims

1. Method for the installation of an airbag unit (1) which comprises a cushion (3), a housing (4, 6) with a housing bottom (6) and a gas generator (2), **characterized by** the following steps:
a) folding the cushion (3),
b) installing the cushion (3) to the housing (4, 6), and subsequently
c) introducing the gas generator (2) into a receiving opening (7) of the housing bottom (6), and
d) fastening the gas generator (2) to the housing (4, 6) by an outer retainer (11) after it has been pushed into the receiving opening (7), wherein
e) the outer retainer (11) is of essentially semicylindrical design and the material of the housing bottom (6) on approximately one half of its peripheral, presses against the gas generator (2).

2. Method according to claim 1, **characterized in that** the gas generator (2) is pressed into the receiving opening (7).

3. Method according to claim 1 or claim 2, **characterized in that** the material of the housing (6) yields in the region around the receiving opening (7) while the gas generator (2) is being fastened by the outer retainer (11) and firmly presses the gas generator (2) in the receiving opening (7).

4. Method according to at least one of the preceding claims, **characterized in that** a cushion-holding ring (5) is inserted into the cushion (3) before it is folded, and the cushion (3) is fastened to the housing bottom (6) by means of the cushion-holding ring (5).

5. Method according to claim 4, **characterized in that** the cushion (3) with the cushion-holding ring (5) inserted is placed into a cover cap (4) of the housing (4, 6) before installation onto the housing bottom (6).

6. Method according to claim 5, **characterized in that** after installation of the cushion (3) into the housing, the housing bottom (6) and cover cap (4) are connected to each other.

7. Method according to claim 4, **characterized in that** the folded cushion (3) with the cushion-holding ring (5) inserted is placed into a depression of the housing bottom before or during installation onto the housing bottom (6).

8. Airbag unit having a cushion (3), a gas generator (2) for inflating the cushion (3) and a housing (4, 6) for receiving the cushion (3) and gas generator (2), the housing (4, 6) having a separate receiving opening (7) for receiving the gas generator (2) after installation of the cushion (3) to the housing (4, 6),
**characterized in that** the receiving opening (7) is formed in a housing bottom (6) of the housing and a retainer (11) is provided by means of which the gas generator (2) can be fastened to the housing bottom (6), wherein the retainer (11) is of essentially semicylindrical design and the material of the housing bottom (6) presses, on approximately one half of its peripheral, against the gas generator (2).

9. Airbag unit according to claim 8, **characterized in that** the receiving opening (7) constitutes a plug-in opening into which the gas generator (2) can be pushed.

10. Airbag unit according to claim 9, **characterized in that** the receiving opening (7) is of essentially cylindrical design.

11. Airbag unit according to claim 10, **characterized in that** the diameter of the receiving opening (7) is smaller than the diameter of the gas generator (2).

12. Airbag unit according to at least one of claims 8 to 11, **characterized in that** the material of the housing (4, 6) is of elastic design in the region of the receiving opening (7).

13. Airbag unit according to at least one of claims 8 to 12, **characterized in that** the housing (4, 6) is of multipart design.

14. Airbag unit according to claim 13, **characterized in that** the housing comprises a cover cap (4) and a housing bottom (6).

15. Airbag unit according to at least one of claims 8 to 14, **characterized in that** the retainer (11) seals the gas generator (2) to the outside.

16. Airbag unit according to at least one of claims 8 to 15, **characterized in that** the cushion (3) is fastened to the housing bottom (6) by a cushion-holding ring (5).

17. Airbag unit according to at least one of claims 8 to 16, **characterized in that** the cushion (3), the cushion-holding ring (5) and the outer retainer (11) are fastened to the housing bottom (6) via the same fastening means, in particular screw connections (9, 10).

## Revendications

1. Procédé pour le montage d'une unité à airbag (1), qui comprend un coussin à gaz (3), un boîtier (4, 6) avec un fond de boîtier (6), et un générateur de gaz (2), comprenant les étapes suivantes :
a) pliage du coussin à gaz (3),
b) montage du coussin à gaz (3) sur le boîtier (4, 6), suivi de
c) introduction du générateur de gaz (2) dans une ouverture de réception (7) du fond de boîtier (6), et
d) fixation du générateur de gaz (2) avec un élément de fixation extérieur (11) sur le boîtier (4, 6) après avoir enfilé le générateur de gaz (2) dans l'ouverture de réception (7), et
e) l'élément de fixation (11) est réalisé sensiblement sous forme demi-cylindrique, et le matériau du fond de boîtier (6) presse sur approximativement une moitié de sa périphérie contre le générateur de gaz (2).

2. Procédé selon la revendication 1, **caractérisé en ce que** le générateur de gaz (2) est engagé à la presse dans l'ouverture de réception (7).

3. Procédé selon la revendication 1 au 2, **caractérisé en ce que** le matériau du boîtier (6) dans la zone autour de l'ouverture de réception (7) fléchit pendant la fixation du générateur de gaz (2) avec l'élément de fixation extérieure (11) et presse fermement le générateur de gaz (2) dans l'ouverture de réception (7).

4. Procédé selon l'une au moins des revendications précédentes, **caractérisé en ce qu'**une bague de maintien (5) du coussin à gaz est insérée dans le coussin à gaz (3) avant son pliage, et le coussin à gaz (3) est fixé sur le fond de boîtier (6) au moyen de la bague de maintien (5) du coussin à gaz.

5. Procédé selon la revendication 4, **caractérisé en ce que** le coussin à gaz (3) avec bague de maintien (5) du coussin à gaz insérée est posé, avant le montage sur le fond de boîtier (6), dans un capuchon de recouvrement (4) du boîtier (4, 6).

6. Procédé selon la revendication 5, **caractérisé en ce que**, après le montage du coussin à gaz (3) dans le boîtier, le fond de boîtier (6) et le capuchon de recouvrement (4) sont reliés l'un à l'autre.

7. Procédé selon la revendication 4, **caractérisé en ce que** le coussin à gaz (3) plié avec bague de maintien (5) du coussin à gaz insérée est posé, avant le montage ou pendant le montage sur le fond de boîtier (6), dans un renfoncement du fond de boîtier.

8. Unité à airbag comprenant un coussin à gaz (3), un générateur de gaz (2) pour gonfler le coussin à gaz (3), et un boîtier (4, 6) pour recevoir le coussin à gaz (3) et le générateur de gaz (2), le boîtier (4, 6) comportant une ouverture de réception séparée (7) pour la réception du générateur de gaz (2) après montage du coussin à gaz (3) sur le boîtier (4, 6), **caractérisée en ce que** l'ouverture de réception (7) est ménagée dans un fond de boîtier (6) du boîtier, et il est prévu un élément de fixation (11) au moyen duquel le générateur de gaz (2) est fixé sur le fond de boîtier (6), l'élément de fixation (11) étant réalisé sensiblement sous forme demi-cylindrique et le matériau du fond de boîtier (6) pressant sur approximativement une moitié de sa périphérie contre le générateur de gaz (2).

9. Unité à airbag selon la revendication 8, **caractérisée en ce que** l'ouverture de réception (7) représente une ouverture d'introduction dans laquelle le générateur de gaz (2) peut être enfilé.

10. Unité à airbag selon la revendication 9, **caractérisée en ce que** l'ouverture de réception (7) est réalisée sensiblement cylindrique.

11. Unité à airbag selon la revendication 10, **caractérisée en ce que** le diamètre de l'ouverture de réception (7) est plus petit que le diamètre du générateur de gaz (2).

12. Unité à airbag selon l'une au moins des revendications 8 à 11, **caractérisée en ce que** le matériau du boîtier (4, 6) est réalisé élastique dans la zone de l'ouverture de réception (7).

13. Unité à airbag selon l'une au moins des revendications 8 à 12, **caractérisée en ce que** le boîtier (4, 6) est réalisé en plusieurs pièces.

14. Unité à airbag selon la revendication 13, **caractérisée en ce que** le boîtier comprend un capuchon de recouvrement (4) et le fond de boîtier (6).

15. Unité à airbag selon l'une au moins des revendications 8 à 14, **caractérisée en ce que** l'élément de fixation (11) étanche le générateur de gaz (2) vers l'extérieur.

16. Unité à airbag selon l'une au moins des revendications 8 à 15, **caractérisée en ce que** le coussin à gaz (3) est fixé sur le fond de boîtier (6) avec une bague de maintien (5) du coussin à gaz.

17. Unité à airbag selon l'une au moins des revendications 8 à 16, **caractérisée en ce que** le coussin à gaz (3), la bague de maintien (5) du coussin à gaz et l'élément de fixation extérieur (11) sont fixés avec les mêmes moyens de fixation, en particulier des liaisons vissées (9, 10), sur le fond de boîtier (6).
